# EUROPEAN PATENT APPLICATION

(11) **EP 4 848 611 A1**
(43) Date of publication of application: **02.12.2026**
(21) Application number: 25758428.4
(22) Date of filing: 18.02.2025
(51) Int. Cl.: H04B 7/06, H04W 24/02, H04W 24/08, H04L 5/00, H04B 17/373, H04B 17/318, H04W 8/24

(54) **METHOD AND DEVICE FOR SIGNALING INFORMATION ABOUT BEAM SET FOR BEAM MANAGEMENT IN WIRELESS COMMUNICATION SYSTEM**

(30) Priority: 19.02.2024 KR 20240023626
(71) Applicant: Hyundai Motor Company, Seoul 06797 (KR); Kia Corporation, Seoul 06797 (KR)
(72) Inventor: SUH, Young Kil, Hwaseong-si Gyeonggi-do 18280 (KR); HONG, Ui Hyun, Hwaseong-si Gyeonggi-do 18280 (KR); LEE, Jeong Su, Hwaseong-si Gyeonggi-do 18280 (KR); HAHN, Gene Back, Hwaseong-si Gyeonggi-do 18280 (KR)
(74) Representative: Isarpatent
(86) International application number: PCT/KR2025/002336
(87) International publication number: WO 2025/178344

(57) **Abstract**

The present disclosure relates to signaling information on a beam set for beam management in a wireless communication system, and a method of operating a terminal may include determining a first set and a second set of beams for artificial intelligence (AI)/machine learning (ML)-based beam management, receiving at least one reference signal corresponding to at least one beam belonging to the second set, predicting information on at least one beam included in the first set based on the at least one reference signal, and transmitting the information on the at least one beam to a base station. The information on the at least one beam included in the first set may be predicted based on a measurement result for the at least one reference signal corresponding to the at least one beam included in the second set.

## Description

### Technical Field

The present disclosure relates to beam management in a wireless communication system, and to a method and apparatus for signaling information on a beam set for beam management.

### Background Art

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6 GHz and above 6 GHz. That is, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

The use of artificial intelligence in the field of communication is increasingly expanding.

Artificial intelligence may be utilized in various areas, such as network operation monitoring, predictive maintenance, network security and fraud prevention, customer service, and intelligent customer relationship management (CRM) systems.

In addition, artificial intelligence may be used to reduce the complexity of signaling between a terminal and a base station or to improve accuracy. To this end, methods of replacing some or all of the signaling for channel measurement, beam management, positioning, and the like by utilizing an artificial intelligence model, or of improving performance thereof, are being studied.

Meanwhile, the description of the background technology of the present invention is provided solely for the purpose of enhancing the understanding of the background of the present invention and may include information that is not considered the conventional technology known to a person having ordinary skill in the art.

### Disclosure

### Technical Problem

To solve the above-described problems, the present disclosure is directed to providing a method and apparatus for effectively signaling information on a beam set for beam management.

The present disclosure is directed to providing a method and apparatus for effectively performing artificial intelligence (AI)/machine learning (ML)-based beam management.

The present disclosure is directed to providing a method and apparatus for configuring a first set of beams that are to be inferred and a second set of beams that are used for inference.

### Technical Solution

According to an embodiment of the present disclosure for achieving the objects, there is provided a method of operating a terminal in a wireless communication system, which may include determining a first set and a second set of beams for artificial intelligence (AI)/machine learning (ML)-based beam management, receiving at least one reference signal corresponding to at least one beam belonging to the second set, predicting information on at least one beam included in the first set based on the at least one reference signal, and transmitting the information on the at least one beam to a base station. The information on the at least one beam included in the first set may be predicted based on a measurement result for the at least one reference signal corresponding to the at least one beam included in the second set.

According to an embodiment of the present disclosure for achieving the above object, there is provided a method of operating a base station in a wireless communication system, which may include determining a first set and a second set of beams for AI/ML-based beam management, transmitting at least one reference signal corresponding to at least one beam belonging to the second set, and receiving information that is predicted based on the at least one reference signal and relates to at least one beam included in the first set. The information that relates to the at least one beam included in the first set may be predicted based on a measurement result for the at least one reference signal corresponding to the at least one beam included in the second set.

According to an embodiment of the present disclosure for achieving the above object, there is provided a terminal in a wireless communication system, which includes at least one transceiver, at least one processor, and at least one memory operably coupled to the at least one processor and storing instructions that, when executed by the processor, control the terminal to perform operations, wherein the operations may include determining a first set and a second set of beams for AI/ML-based beam management, receiving at least one reference signal corresponding to at least one beam belonging to the second set, predicting information on at least one beam included in the first set based on the at least one reference signal, and transmitting the information on the at least one beam to a base station. The information on the at least one beam included in the first set may be predicted based on a measurement result for the at least one reference signal corresponding to the at least one beam included in the second set.

According to an embodiment of the present disclosure for achieving the above object, there is provided a base station in a wireless communication system, which includes at least one transceiver, at least one processor, and at least one memory operably coupled to the at least one processor and storing instructions that, when executed by the processor, control the terminal to perform operations, wherein the operations may include determining a first set and a second set of beams for AI/ML-based beam management, transmitting at least one reference signal corresponding to at least one beam belonging to the second set, and receiving information that is predicted based on the at least one reference signal and relates to at least one beam included in the first set. The information that relates to the at least one beam included in the first set may be predicted based on a measurement result for the at least one reference signal corresponding to the at least one beam included in the second set.

### Advantageous Effects

The proposed technology proposes a method for effective beam management.

### Description of Drawings

FIG. 1 illustrates a wireless communication system according to an embodiment of the present disclosure.
FIG. 2 illustrates a block diagram of a communication node according to an embodiment of the present disclosure.
FIG. 3A illustrates a block diagram of a transmission path of a communication node according to an embodiment of the present disclosure.
FIG. 3B illustrates a block diagram of a reception path of a communication node according to an embodiment of the present disclosure.
FIG. 4 illustrates an apparatus for inferring or training an artificial intelligence/machine learning (AI/ML) model according to an embodiment of the present disclosure.
FIG. 5 illustrates a structure of a neural network according to an embodiment of the present disclosure.
FIG. 6 illustrates an AI/ML framework according to an embodiment of the present disclosure.
FIG. 7 illustrates a procedure for AI/ML-based beam management according to an embodiment of the present disclosure.
FIGS. 8A to 8C illustrate examples of configurations of beam sets according to an embodiment of the present disclosure.
FIG. 9 illustrates an example in which beams of a base station are represented in two dimensions according to an embodiment of the present disclosure.
FIGS. 10A and 10B illustrate examples of patterns of beam set B according to an embodiment of the present disclosure.

### Mode for Invention

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)). In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

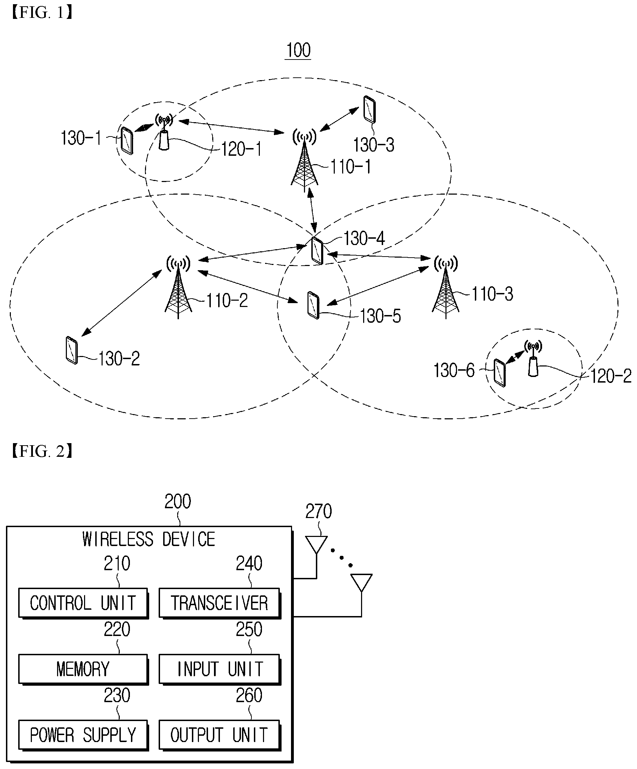

FIG. 1 is a conceptual diagram illustrating an embodiment of a communication system.

Referring to FIG. 1, the communication system 100 may include a plurality of communication nodes 110-1, 110-2, 110-3, 120-1, 120-2, 130-1, 130-2, 130-3, 130-4, 130-5 and 130-6. Additionally, the communication system 100 may further include a core network (e.g., an S-GW (serving-gateway), a P-GW (PDN (packet data network)-gateway), and an MME (mobility management entity)). If the communication system 100 is a 5G communication system (e.g., a new radio (NR) system), the core network may include an AMF (access and mobility management function), a UPF (user plane function), an SMF (session management function), etc.

The plurality of communication nodes 110 to 130 may support communication protocols defined in 3GPP (3rd generation partnership project) standards (e.g., LTE communication protocol, LTE-A communication protocol, NR communication protocol, etc.). The plurality of communication nodes 110 to 130 may support CDMA (code division multiple access) technology, WCDMA (wideband CDMA) technology, TDMA (time division multiple access) technology, FDMA (frequency division multiple access) technology, OFDM (orthogonal frequency division multiplexing) technology, Filtered OFDM technology, CP (cyclic prefix)-OFDM technology, DFT-s-OFDM (discrete Fourier transform-spread-OFDM) technology, OFDMA (orthogonal frequency division multiple access) technology, SC (single carrier)-FDMA technology, NOMA (non-orthogonal multiple access) technology, GFDM (generalized frequency division multiplexing) technology, FBMC (filter bank multi-carrier) technology, UFMC (universal filtered multi-carrier) technology, SDMA (space division multiple access) technology, etc. Each of the plurality of communication nodes may have the following structure.

FIG. 2 is a block diagram illustrating an embodiment of a communication node constituting a communication system.

FIG. 2 is a drawing showing an example of a wireless device 200 in a wireless communication system according to one embodiment of the present disclosure. The wireless device 200 according to an embodiment of the present disclosure may be a mobile terminal such as a smartphone, tablet PC, or wearable device, but may not be limited thereto.

Referring to FIG. 2, the wireless device 200 may include at least one control unit 210, at least one memory 220, at least one power supply 230, at least one transceiver 240, at least one input unit 250, at least one output unit 260 and/or at least one antenna 270.

The control unit 210 may control the memory 220 and/or the transceiver 240 and may be configured to implement the descriptions, functions, procedures, proposals, methods, and/or flowcharts disclosed in this disclosure. The memory 220 may be connected to the control unit 210 and may store various information related to the operation of the control unit 210. For example, the memory 220 may store software code including instructions for performing some or all of controls controlled by the control unit 210 or for performing the descriptions, functions, procedures, proposals, methods, and/or flowcharts disclosed in this disclosure. The configuration of the memory is not limited in a particular way. For example, it may be configured as at least one of read-only memory (ROM) and random access memory (RAM).

At least one control unit 210 may be referred to as a controller, microcontroller, microprocessor, or microcomputer. The descriptions, functions, procedures, proposals, methods, and/or flowcharts disclosed in this disclosure may be implemented using firmware or software in the form of code, instructions, and/or sets of instructions. Here, the firmware or software may execute other programs stored in the memory 220, such as an OS. The control unit 210 may be implemented to support differently weighted beamforming or directional routing operations to effectively control an outgoing signal from at least one antenna 270 in a desired direction.

Additionally, at least one control unit 210 may be coupled with a backhaul or network interface. The wireless device 200 may communicate with other wireless devices through the backhaul or network interface. The control unit 210 may include at least one processor. The processor may mean a central processing unit (CPU), a graphics processing unit (GPU), or a dedicated processor on which the methods according to embodiments of the present disclosure are performed.

At least one transceiver 240 may be connected to the control unit 210 and may transmit and/or receive a wireless signal through at least one antenna 270. The transceiver 240 may include a transmitter and/or a receiver. At least one transceiver 240 may transmit user data, control information, wireless signals/channels, etc., as described in the methods and/or flowcharts of the present disclosure to at least one other device. For example, at least one transceiver 240 may be connected to at least one control unit 210 and may transmit and receive wireless signals. Additionally, at least one control unit 210 may control at least one transceiver 240 to transmit user data, control information, or wireless signals to at least one other device. At least one transceiver 240 may receive a signal transmitted by another wireless device through at least one antenna 270. Additionally, at least one transceiver 240 may down-convert or up-convert the received signal to generate a baseband signal. At least one antenna 270 may be a plurality of physical antennas or a plurality of logical antennas (e.g., antenna ports).

The input unit 250 may acquire information such as user input, video, and audio, and may include various input means such as various mechanical/electronic input means, cameras, and microphones. The output unit 260 provides information to a user by generating output related to sight, hearing, or touch, and may include a display, speaker, vibration module, etc. The wireless device 200 supplies power through the power supply 230, and the power supply 230 may include a wired/wireless charging circuit, battery, etc.

Referring again to FIG. 1, the communication system 100 may include a plurality of base stations 110-1, 110-2, 110-3, 120-1 and 120-2 and a plurality of terminals 130-1, 130-2, 130-3, 130-4, 130-5 and 130-6. Each of the first base station 110-1, the second base station 110-2, and the third base station 110-3 may form a macro cell. Each of the fourth base station 120-1 and the fifth base station 120-2 may form a small cell. The fourth base station 120-1, the third terminal 130-3, and the fourth terminal 130-4 may be located within the cell coverage of the first base station 110-1. The second terminal 130-2, the fourth terminal 130-4, and the fifth terminal 130-5 may be located within the cell coverage of the second base station 110-2. The fifth base station 120-2, the fourth terminal 130-4, the fifth terminal 130-5, and the sixth terminal 130-6 may be located within the cell coverage of the third base station 110-3. The first terminal 130-1 may be located within the cell coverage of the fourth base station 120-1. The sixth terminal 130-6 may be located within the cell coverage of the fifth base station 120-2.

Here, each of the plurality of base stations 110-1, 110-2, 110-3, 120-1 and 120-2 may be referred to as NB (NodeB), eNB (evolved NodeB), gNB, ABS (advanced base station), HR-BS (high reliability-base station), BTS (base transceiver station), radio base station, radio transceiver, access point, access node, RAS (radio access station), MMR-BS (mobile multihop relay-base station), RS (relay station), ARS (advanced relay station), HR-RS (high reliability-relay station), HNB (home NodeB), HeNB (home eNodeB), RSU (road side unit), RRH (radio remote head), TP (transmission point), TRP (transmission and reception point), etc.

Each of the plurality of terminals 130-1, 130-2, 130-3, 130-4, 130-5 and 130-6 may be referred to as UE (user equipment), TE (terminal equipment), AMS (advanced mobile station), HR-MS (high reliability-mobile station), terminal, access terminal, mobile terminal, station, subscriber station, mobile station, portable subscriber station, node, device, OBU (on board unit), etc.

Meanwhile, each of the plurality of base stations 110-1, 110-2, 110-3, 120-1 and 120-2 may operate in different frequency bands or in the same frequency band. Each of the plurality of base stations 110-1, 110-2, 110-3, 120-1 and 120-2 may be connected to each other via an ideal backhaul link or a non-ideal backhaul link, and may exchange information with each other via an ideal backhaul link or a non-ideal backhaul link. Each of the plurality of base stations 110-1, 110-2, 110-3, 120-1 and 120-2 may be connected to a core network via an ideal backhaul link or a non-ideal backhaul link. Each of the multiple base stations 110-1, 110-2, 110-3, 120-1 and 120-2 may transmit a signal received from the core network to the corresponding terminal 130-1, 130-2, 130-3, 130-4, 130-5 or 130-6, and may transmit a signal received from the corresponding terminal 130-1, 130-2, 130-3, 130-4, 130-5 or 130-6 to the core network.

In addition, each of the plurality of base stations 110-1, 110-2, 110-3, 120-1 and 120-2 may support MIMO transmission (e.g., SU (single user)-MIMO, MU (multi user)-MIMO, massive MIMO, etc.), CoMP (coordinated multipoint) transmission, carrier aggregation (CA) transmission, transmission in an unlicensed band, sidelink communication (e.g., D2D (device to device communication), ProSe (proximity services)), IoT (Internet of Things) communication, dual connectivity (DC), etc. Here, each of the plurality of terminals 130-1, 130-2, 130-3, 130-4, 130-5 and 130-6 may perform an operation corresponding to the base station 110-1, 110-2, 110-3, 120-1 or 120-2 and an operation supported by the base station 110-1, 110-2, 110-3, 120-1or 120-2. For example, the second base station 110-2 may transmit a signal to the fourth terminal 130-4 based on the SU-MIMO method, and the fourth terminal 130-4 may receive a signal from the second base station 110-2 by the SU-MIMO method. Alternatively, the second base station 110-2 may transmit a signal to the fourth terminal 130-4 and the fifth terminal 130-5 based on the MU-MIMO method, and each of the fourth terminal 130-4 and the fifth terminal 130-5 may receive a signal from the second base station 110-2 by the MU-MIMO method.

Each of the first base station 110-1, the second base station 110-2, and the third base station 110-3 may transmit a signal to the fourth terminal 130-4 based on the CoMP method, and the fourth terminal 130-4 may receive a signal from the first base station 110-1, the second base station 110-2, and the third base station 110-3 by the CoMP method. Each of the plurality of base stations 110-1, 110-2, 110-3, 120-1 and 120-2 may transmit and receive signals based on the CA method to and from the terminals 130-1, 130-2, 130-3, 130-4, 130-5 and 130-6 within its cell coverage area. Each of the first base station 110-1, the second base station 110-2, and the third base station 110-3 may control sidelink communication between the fourth terminal 130-4 and the fifth terminal 130-5, and each of the fourth terminal 130-4 and the fifth terminal 130-5 may perform sidelink communication by control of each of the second base station 110-2 and the third base station 110-3.

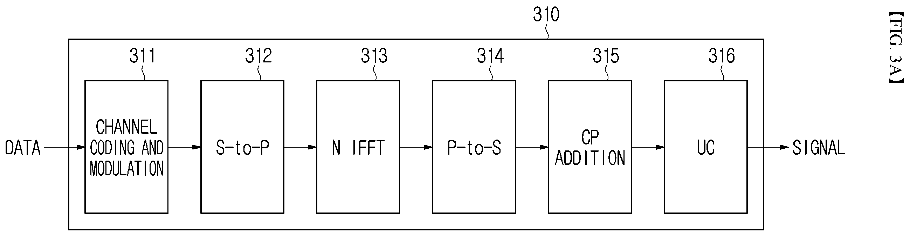

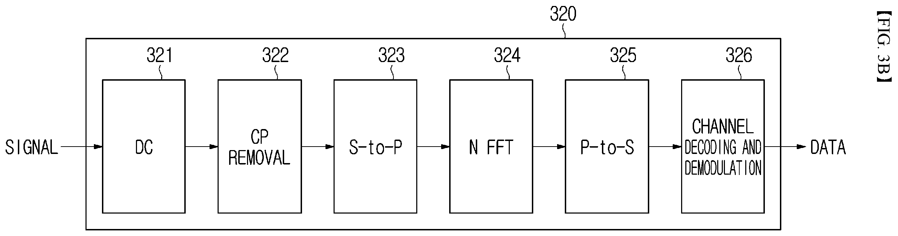

FIG. 3 illustrates an apparatus for inferring or training an AI/ML model according to an embodiment of the present disclosure.

The apparatus for inferring or training the AI/ML model of FIG. 3 may be an embodiment of the wireless device 200 of the apparatus in FIG. 2. Accordingly, the communication unit, the control unit, and the storage unit of FIG. 3 may correspond to the transceiver 240, the controller 210, and the memory 220 of FIG. 2, respectively. Hereinafter, for convenience of description, the apparatus for inferring or training the AI/ML model is assumed to be a server and is described as such. In addition, when the server is connected to the outside through wireless communication, the communication unit may include the antenna 270 of FIG. 2. The control unit may perform AI/ML data training or inference. The AI model may be implemented in various forms. For example, the AI model may be a model based on a neural network. A model such as a deep neural network (DNN) model, a recurrent neural network (RNN) model, or a bidirectional recurrent deep neural network (BRDNN) model may be used as the neural network model.

The communication unit may perform communication with an external device, and the server may receive various types of information through the communication unit. Accordingly, the communication unit may receive monitoring information, user input information, and the like for training the AI/ML model and transfer the information to the control unit. Thus, the communication unit may perform wired or wireless communication with an external device. The server may transmit and receive signals through the communication unit to and from an external device such as an artificial satellite, a mobile device, and an autonomous vehicle. The wireless communication may include cellular communication, short-range wireless communication, or global navigation satellite system (GNSS) communication.

The storage unit may store a learning model, input data, output data, and the like. Accordingly, the storage unit may store an AI model that is trained by the control unit or an AI that is updated by the control unit and provide data when necessary according to a command of the control unit.

The control unit may include an AI/ML management unit, a model training unit, and a model inference unit. The AI/ML management unit may manage the communication unit, the model inference unit, and the model training unit so that an inference task or a training task is efficiently performed. For example, the management unit may receive monitoring information through the communication unit, receive an output that is output from the model inference unit, and then determine the performance of the inference. The management unit may transfer the determined performance to the model training unit and instruct the model training unit to train the AI/ML model based on the performance. That is, the management unit may transfer performance feedback information to the model inference unit, and the model inference unit may use the performance feedback information to indicate a training objective or as a reward for reinforcement learning. In addition, the control unit may indicate the AI/ML model to be used by the server or an external device or indicate activation/deactivation of the use of the AI/ML model. Although FIG. 3 illustrates, for convenience of description, that the server includes both the model training unit and the model inference unit, the server may include only one of the model training unit and the model inference unit depending on the use of the server. In addition, the above-described structure of FIG. 3 may be applied not only to a server but also to other devices in which inference or training occurs, such as a terminal, a wireless device, an autonomous vehicle, and a mobile device.

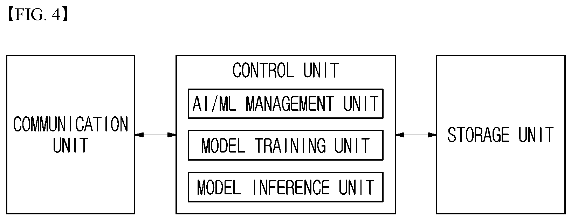

FIG. 4A is a block diagram illustrating an embodiment of a transmission path, and FIG. 4B is a block diagram illustrating an embodiment of a reception path.

Referring to FIGS. 4A and 4B, a transmission path 410 may be implemented at a communication node that transmits a signal, and a reception path 420 may be implemented at a communication node that receives a signal. The transmission path 410 may include a channel coding and modulation block 411, an S-to-P (serial-to-parallel) block 412, an N IFFT (Inverse Fast Fourier Transform) block 413, a P-to-S (parallel-to-serial) block 414, a CP (cyclic prefix) addition block 415, and an UC (up-converter) (UC) 416. The reception path 420 may include a DC (down-converter) 421, a CP removal block 422, an S-to-P block 423, an N FFT block 424, a P-to-S block 425, and a channel decoding and demodulation block 426. Here, N may be a natural number.

Information bits in the transmission path 410 may be input to the channel coding and modulation block 411. The channel coding and modulation block 411 may perform coding operations (e.g., LDPC (low-density parity check) (LDPC) coding operations, polar coding operations, etc.) and modulation operations (e.g., QPSK (Quadrature Phase Shift Keying), QAM (Quadrature Amplitude Modulation), etc.) on the information bits. The output of the channel coding and modulation block 411 may be a sequence of modulation symbols.

The S-to-P block 412 may convert modulated symbols in the frequency domain into parallel symbol streams to generate N parallel symbol streams. N may be the IFFT size or the FFT size. The N IFFT block 413 may generate signals in the time domain by performing an IFFT operation on the N parallel symbol streams. The P-to-S block 414 may convert the output (e.g., parallel signals) of the N IFFT block 413 into a serial signal to generate a serial signal.

The CP addition block 415 may insert CP into the signal. The UC 416 may up-convert the frequency of the output of the CP addition block 415 into an RF (radio frequency) frequency. Additionally, the output of the CP addition block 415 may be filtered in the baseband before up-conversion.

A signal transmitted from the transmission path 410 may be input to the reception path 420. The operation in the reception path 420 may be the inverse operation of the operation in the transmission path 410. The DC 421 may down-convert the frequency of the received signal into a baseband frequency. The CP removal block 422 may remove CP from the signal. The output of the CP removal block 422 may be a serial signal. The S-to-P block 423 may convert the serial signal into parallel signals. The N FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and reconstruct data by performing a decoding operation on the result of the demodulation operation.

In FIGS. 4A and 4B, Discrete Fourier Transform (DFT) and Inverse DFT (IDFT) may be used instead of FFT and IFFT. In FIGS. 4a and 4b, each of the blocks (e.g., components) may be implemented by at least one of hardware, software, or firmware. For example, in FIGS. 4a and 4b, some blocks may be implemented by software, and the remaining blocks may be implemented by hardware or a "combination of hardware and software." In FIGS. 4a and 4b, one block may be subdivided into multiple blocks, multiple blocks may be unified into one block, some blocks may be omitted, and blocks supporting other functions may be added.

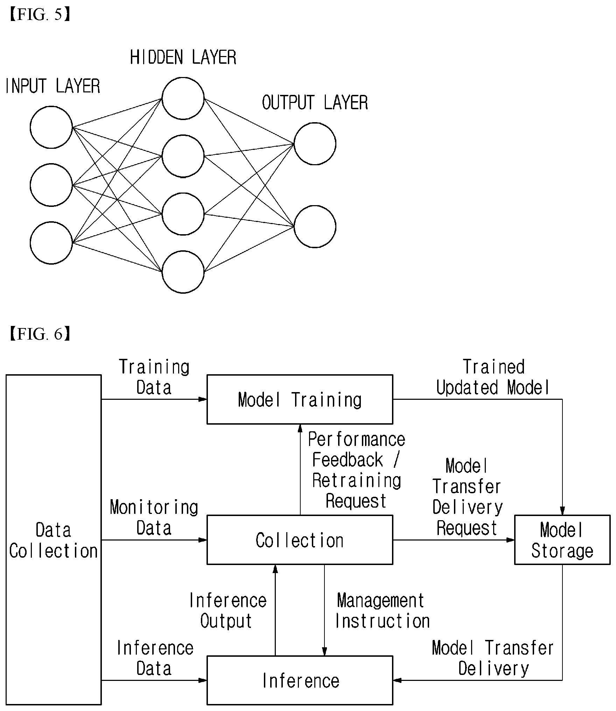

FIG. 5 illustrates an example of a structure of a neural network that is applicable to the present disclosure. In the neural network, an input layer is a first layer that receives external data. The input layer may receive various forms of raw data and transfer them after featuring. Here, featuring means extracting a characteristic part of the raw data. The number of neurons in the input layer may be determined based on a characteristic, a requirement, and the like of given data.

In the neural network, a hidden layer may be composed of one or more layers located between the input layer and an output layer. Accordingly, unlike FIG. 5, the hidden layer may be formed as two or more layers. The neurons of the hidden layer may represent a transformed form of input data, and the depth and width of the hidden layer may determine the complexity of an AI/ML model. A non-linear relationship between the input layer and the output layer may be implemented using the hidden layer.

The output layer is the last layer of the neural network and may provide a final result value. An error between a prediction of the neural network and an actual target value may be calculated based on the final result value of the output layer.

Accordingly, data that is input through the input layer may be transferred to the output layer through the hidden layer formed as one or more layers. In this process, a characteristic of the input data may be extracted. The neural network may be trained using an algorithm such as a backpropagation algorithm and a gradient descent algorithm. The training may be performed in a method in which a reward is given as feedback based on the error calculated at the output layer. Based on such feedback, a weight of each layer may be updated. Such training may be repeatedly performed to optimize the inference of the AI/ML model.

AI-related Terms to be used in the present disclosure may be defined as follows.

An AI/ML-enabled feature means a specific feature in which AI/ML may be used. For example, CSI measurement, beam management, and a positioning function may be AI/ML-enabled features.

An AI/ML model means an algorithm that applies AI/ML techniques to generate a set of outputs based on a set of inputs. In the present disclosure, the AI/ML model may mean not the algorithm itself but a set of parameter values for specifying the AI/ML model. For example, the AI/ML model may be expressed as a set of weights of a neural network.

AI/ML model delivery means delivering an AI/ML model from one entity to another entity. Here, an entity may mean a network node/function (e.g., a gNB or an LMF), a UE, and an independent server. Accordingly, an AI/ML model trained at a first entity may be delivered to a second entity.

AI/ML model inference means a process of generating a set of outputs based on a set of inputs by using a trained AI/ML model within one entity.

AI/ML model testing means a process of evaluating the performance of a final AI/ML model using a dataset different from a dataset used for AI/ML model training and validation and may be included as a sub-process of training. Unlike AI/ML model validation, testing means additional tuning of the model.

AI/ML model training means a process of training an AI/ML model in a data-driven method to learn an input/output relationship and to obtain a trained AI/ML model that may be used for inference.

AI/ML model transfer means that an AI/ML model is delivered from a transmitting side to a receiving side. It may be delivered wirelessly or by wire, and a parameter of a model structure known at the receiving side or a parameter related to a new model may be included in the delivery. The delivered parameters may include a parameter for the entire model or a part of the model.

AI/ML model validation is a sub-process of training that evaluates the quality of an AI/ML model using a dataset different from a dataset used for AI/ML model training. It may be used to determine model parameters not only for the dataset used for model training but also for a generalized dataset.

Data collection means that a network node, a management entity, or a UE collects data for AI/ML model training, data analytics, and inference.

Federated learning or federated training means a machine learning technique in which an AI/ML model is trained through local model training that uses respective local data at a plurality of distributed edge nodes (e.g., UEs, gNBs). Federated learning may require multiple interactions among nodes related to edge AI/ML models. In this case, exchange of local data is not essential.

Functionality identification means a process of identifying AI/ML functionality so that the functionality is commonly recognized between a network and a UE. Information on the AI/ML functionality may be shared during the functionality identification process.

A management instruction means information necessary to ensure a proper inference task. The management instruction may include selection/(de)activation/switching of an AI/ML model or an AI/ML function, an AI/ML task, as well as other alternative tasks.

Model activation means activating an AI/ML model for a specific AI/ML-enabled feature, and model deactivation means deactivating an AI/ML model for a specific AI/ML-enabled feature.

Model download means that a network transmits an AI/ML model to a UE and the UE receives the AI/ML model. Model identification means identifying an AI/ML model based on functionality identification commonly recognized between the network and the UE. Information on the AI/ML model may be shared during model identification. Model upload means that a UE transmits a model to the network.

Model monitoring means a procedure of monitoring the inference performance of an AI/ML model, and model parameter update means a process of updating a parameter of a model.

Model selection means selecting one of a plurality of models for one AI/ML-enabled feature in order to activate the model. Model selection may be performed simultaneously with model activation. Model switching means deactivating a currently activated AI/ML model and activating another AI/ML model for a specific AI/ML-enabled feature. Model update means a process of updating a parameter and/or a structure of a model.

AI/ML models may be classified according to a location of inference. A network-side AI/ML model means an AI/ML model in which inference is performed entirely at a network. A two-sided AI/ML model means a pair of AI/ML models in which inference is performed jointly at a UE and a network. Joint inference means that some inference is first performed at a UE and then the remaining part is performed at a gNB. A UE-side AI/ML model means an AI/ML model in which inference is performed entirely at a UE.

The following training methods may be used to train an AI/ML model. Reinforcement learning (RL) means a process of training an AI/ML model based on a feedback signal (e.g., a reward) and an input (i.e., a state) that result from an output (e.g., an action) of the model in an environment with which the model interacts. Semi-supervised learning means a process of training a model by mixing labeled data and unlabeled data. Supervised learning means a process of training a model from inputs and corresponding labels. Unsupervised learning means a process of training a model using unlabeled data.

Hereinafter, an initial access procedure between a terminal and a base station is described. When the initial access procedure with the base station is performed due to a power on/off operation of the terminal, departure from coverage, or the like, an identification procedure between the base station and the terminal may be required. First, the terminal may perform an initial cell search operation with the base station. The terminal may perform monitoring to receive a synchronization signal. The synchronization signal may be at least one of a primary synchronization signal (PSS), a secondary synchronization signal (SSS), and the like. The terminal may receive a physical broadcast channel (PBCH) signal from the base station to acquire broadcast information within a cell. The terminal may acquire information on the cell using at least one of a master information block (MIB) or a system information block (SIB) based on the physical broadcast channel. A block including all of the PSS, the SSS, and the PBCH may be referred to as a synchronization signal block (SSB).

The terminal may perform a random access procedure. The terminal may transmit a preamble to the base station and receive a random access response (RAR) from the base station. The RAR message may include a temporary identifier. The terminal may transmit a MSG3 (or an RRC connection request message) using scheduling information in the RAR, and the base station may transmit a MSG4 (or a contention resolution message) to the terminal in response to the MSG3 to perform a contention resolution procedure.

The base station may perform beam management based on a RACH occasion that is used for the transmission of the preamble used in the random access procedure. For example, based on the RACH occasion on which the preamble is transmitted, the base station may know a beam on which the terminal receives the synchronization signal. The synchronization signal may also be included as a reference signal for indicating a QCL relationship, and the QCL relationship may be configured with reference to an SSB received through the initial access procedure.

In addition, a channel measurement procedure may be performed for beam management. The terminal may receive a reference signal from the base station. Based on this, the terminal may report channel state information (CSI) to the base station. The channel state information may include at least one of a reference signal received power (RSRP), a reference signal received quality (RSRQ), a signal-to-noise ratio (SNR), and the like. The base station may use the received channel state information to adjust beamforming for the terminal or to optimize radio resource allocation. For channel measurement, the base station may transmit configuration information for channel measurement to the terminal. The configuration information for channel measurement may include information related to a measurement target, information on a measurement period, and the like.

### Enhancement of CSI Feedback Using Artificial Intelligence

A terminal and a base station may perform a procedure of estimating a channel state and reporting the channel state by using an artificial intelligence. When an artificial intelligence is used, a CSI feedback process may be enhanced. Typically, an AI model may be used for spatial-frequency domain CSI compression. A two-sided model may be used for spatial-frequency domain CSI compression. Pre-processing and post-processing, and quantization and dequantization processes may be included in the CSI compression process. AI/ML-based CSI compression may be performed based on an existing framework, similar to the above-described CSI feedback procedure. In addition, an AI model may be used for time domain CSI prediction. Since CSI measurement is measured at the terminal, a UE-side model may be used.

In the case of CSI compression using a two-sided model, three types of AI/ML model training collaboration schemes may be considered. A first training collaboration type means a type in which a two-sided model is jointly trained at a single side or entity, and may be performed at a UE side or a network side. Which side performs the training may be determined based on at least one of whether the model may be kept proprietary, privacy protection, whether a specific model is supported, whether device-specific optimization is performed, flexibility of model update, the possibility that each model is developed/updated, whether a unified CSI reconstruction model is built for different UEs, whether a unified CSI generation model is built for different networks, scalability, and model performance.

A second training collaboration type is a type in which a two-sided model is jointly trained at the network side and the UE side, respectively. A third training collaboration type is a type in which training is performed separately at the network side and the UE side, in which the UE side trains the CSI generation part and the network side trains the CSI reconstruction part. Joint training requires that the generation model and the reconstruction model be trained through forward propagation and back propagation in the same loop, and may be performed at least one node. Separate training means sequential training starting at the UE side or the network side.

In the second training collaboration type, joint training may include both simultaneous training and sequential training. The sequential training of the second training collaboration type may start with network-side training.

In the second training collaboration type, which of simultaneous training and sequential training is to be selected may be determined based on at least one of whether a model may be kept proprietary, privacy protection, flexibility of whether a specific model is supported, whether device-specific optimization is performed, flexibility of model update, the possibility that each model is developed/updated, whether a unified CSI reconstruction model is built for different UEs, whether a unified CSI generation model is built for different networks, scalability, whether a training data distribution may match an inference device, software/hardware compatibility, and model performance. In the third training collaboration type, whether training is first performed at a network or a UE may be determined, as with the conditions considered in the second training collaboration type, based on whether proprietary maintenance is provided, whether privacy is protected, and the like.

A scheme of generating data for an artificial intelligence model may be implemented in various ways. As an example, in a case in which CSI compression is used, training data for model training may be generated by a UE/gNB. For a network part of two-sided model inference, input data may be generated by the UE and terminated at a base station. For a UE part of two-sided model inference, input data may be used internally at the UE.

In addition, for performance monitoring at the network side, when necessary, a calculated performance metric or data for calculating a performance metric may be generated by the UE and terminated at the base station. In a case in which CSI compression is used through a two-sided model, pairing information based on model identification may be configured to select a CSI generation model that is compatible with a CSI reconstruction model used at the base station.

CSI prediction using AI may be applied as follows. Training data for model training may be generated by a UE. In the case of UE-side model inference, input data may be used internally at the UE. A performance metric necessary for performance monitoring at a network side or data for calculating a performance metric may be generated by the UE and terminated at a gNB.

### Beam Management Using Artificial Intelligence

The beams of a base station and a terminal may manage configurations related to beams through an artificial intelligence (AI). For convenience, beam set B is referred to as a beam set on which measurement is performed as an input of an AI/ML model, and set A is referred to as a beam set that is determined based on inference of the AI/ML model. Beam set A and beam set B may be beam information regarding the same frequency range.

The AI may be used to infer a spatial domain downlink beam for beam set A based on measurement of beam set B. As another example, the AI may be used to infer a temporal downlink beam for beam set A based on past measurement results of beam set B. Here, beam set A and beam set B may be different sets, or beam set B may be a subset of beam set A.

In addition, the input of an AI model may be formed in various combinations. For example, the input of the AI may include at least one of an L1-RSRP measurement measured based on beam set B, other assistance information, a channel impulse response (CIR) based on beam set B, and a downlink Tx/Rx beam identifier (ID) related to the L1-RSRP measurement of beam set B.

The above-described AI model may be designed such that a beam including at least one of a downlink reception beam and a downlink transmission beam may be inferred through the AI model. In addition, the output of the AI model may include at least one of a transmission beam, a reception beam, an L1-RSRP of a transmission beam, an L1-RSRP of a reception beam, an angle of a transmission beam, an angle of a reception beam, and other information.

A beam management method using the AI model is not limited to the method described above. The AI model may be variously configured by configuring inputs and outputs in various combinations of beam set A, configurations regarding beam set B, performance monitoring, data collection, assistance information, and the like.

In addition, the training and inference methods may also be variously implemented. For example, an AI may be learned or trained using an AI/ML model. The learning and training may be performed by a network or a UE. In addition, the training and the inference may be performed at different devices. As an example, training may be performed at the network, and inference may be performed at the terminal. Split training may be performed in a method in which a part of the training is performed at a first device and another part of the training is performed at a second device. Similar to the training, split inference may be performed using a plurality of devices. Input data for the inference may also be generated in various ways. For example, input data may be generated at the UE, and inference may be performed using the input data at the network. In addition, input data generated at the UE may be used to perform inference internally within the UE.

### Enhanced Positioning Method Using Artificial Intelligence

A terminal and a base station may perform a positioning procedure of determining a location of the terminal using an AI. To improve the accuracy of positioning, a method in which a location is directly determined through an AI/ML model and a method of assisted positioning may be considered.

In a scheme in which a location is directly determined through an AI/ML model, a location of a UE is output, and channel fingerprinting based on channel observation may be used as an input of the AI/ML model. The fingerprinting scheme is a positioning technique based on probabilistic modeling that utilizes noise and surrounding environment information as information for location tracking. Accordingly, the fingerprinting scheme may construct a fingerprint map based on signal strength values by utilizing existing devices such as a wireless access point (AP), and the location of the terminal may be determined based on a channel fingerprint that is generated by the terminal through channel observation.

In a scheme in which assisted positioning is performed through an AI/ML model, an enhanced value of a new measurement and/or an existing measurement is output, and LOS/NLOS identification, the timing and/or angle of a measurement, the likelihood of a measurement, and the like may be input.

Specifically, the following methods may be considered.
- UE-based positioning, direct AI/ML or AI/ML assisted positioning using a UE-side model
- UE-assisted/LMF-based positioning, AI/ML assisted positioning using a UE-side model
- UE-assisted/LMF-based positioning, direct AI/ML positioning using an LMF-side model
- NG-RAN node assisted positioning, AI/ML assisted positioning using a gNB-side model
- NG-RAN node assisted positioning, direct AI/ML positioning using an LMF-side model

A scheme of generating data for an AI model may be implemented in various ways. That is, for AI/ML model training for positioning, training data may be generated by a UE/PRU/gNB/LMF. In the case of LMF-side model inference, input data may be generated by the UE/gNB and terminated at an LMF. In the case of gNB-side model inference, input data may be used internally at the gNB. In the case of UE-side model inference, input data may be used internally at the UE. For performance monitoring at the LMF side, when necessary, a calculated performance metric or data for calculating a performance metric may be generated by the UE/gNB and terminated at the LMF. For performance monitoring at the gNB side, when necessary, a calculated performance metric or data for calculating a performance metric may be generated at least by the gNB.

Among the agenda items related to AI/ML for the NR air interface to be discussed in Rel-19 radio access network (RAN) working group 1 (WG1), the content of the work item description (WID) document for AI/ML-based beam management is as shown in [Table 1] below.

**[Table 1]**

| | |
|---|---|
| Provide specification support for the following aspects: | |
| ^{.} | |
| - Beam management - DL Tx beam prediction for both UE-sided model and NW-sided model encompassing [RAN1/RAN2]: | |
| | ∘ Spatial-domain DL Tx beam prediction for Set A of beams based on measurement results o Set B of beams ("BM-Casel") |
| | ∘ Temporal DL Tx beam prediction for Set A of beams based on the historic measurement results of Set B of beams ("BM-Case2") |
| | ∘ Specify necessary signalling/mechanism(s) to facilitate LCM operations specific to the Bean Management use cases, if any |
| | ∘ Enabling method(s) to ensure consistency between training and inference regarding NV-side additional conditions (if identified) for inference at UE |
| NOTE: Strive for common framework design to support both BM-Casel and BM-Case2 | |
| ... | |

In 3GPP Rel-18 RAN WG1, discussions were conducted at the study item (SI) stage to develop standards utilizing AI/ML. Specifically, study was conducted on three major technical categories, namely CSI feedback, beam management, and positioning accuracy enhancement, of which beam management and positioning accuracy enhancement are to be discussed at the work item (WI) stage in Rel-19. Table 1 shows the development scope of AI/ML-based beam management to be discussed in Rel-19.

As presented above, Rel-19 considers DL transmission (Tx) beam prediction, and as the AI/ML models used therein, a UE-sided model and an NW-sided model are considered. Here, the UE-sided model and the NW-sided model may have a structure in which a UE and an NW each perform at least one operation for an AI/ML procedure, rather than using an AI/ML model coupled between the UE and the NW. The detailed development scope includes the following four topics.
- Spatial domain beam prediction for set A beams based on set B beam measurement results: BM-Case1
- Time domain beam prediction for set A beams based on set B beam measurement results: BM-Case2
- Signaling and mechanisms necessary for life cycle management (LCM) operations related to beam management
- Training related to additional conditions of the NW for inference at the UE, and a method for ensuring consistency between training and inference

In addition, standardization aims at developing a common framework that is capable of supporting both BM-Case1 and BM-Case2 as much as possible.

Through the AI/ML study in 3GPP Rel-18, the TR 38.843 document was prepared, and the document deals with the NR air interface based on AI/ML. Specifically, the standard defines an AI/ML framework to be commonly used in AI/ML of the NR air interface and includes descriptions of three representative use cases (e.g., CSI feedback, positioning accuracy enhancement, beam management, etc.), performance evaluation results, expected specification changes, and the like. Subsequently, Rel-19 RAN WG1 is to proceed with standard development for positioning accuracy enhancement and beam management and additional study on CSI-RS feedback, and the AI/ML framework mentioned above is as shown in FIG. 6.

FIG. 6 illustrates an AI/ML framework according to an embodiment of the present disclosure. Depending on an entity in which the computation for the AI/ML framework as shown in FIG. 6 is physically performed, AI/ML models are classified into an NW-side AI/ML model, a UE-side AI/ML model, and a two-side AI/ML model. Among these models, the NW-side AI/ML model and the UE-side AI/ML model process all AI/ML computations at one of the base station and the terminal, and the two-side AI/ML model performs AI/ML computations jointly by the base station and the terminal. Thus, the two-side AI/ML model requires a much larger amount of data transmission for AI/ML and may have much greater complexity than the NW-side AI/ML model and the UE-side AI/ML model. Accordingly, in Rel-19, standardization of the NW-side AI/ML model and the UE-side AI/ML model is expected.

In AI/ML-based beam management, beams are classified into a plurality of sets. A set A of beams, a set B of beams, and a set C of beams may be defined, and the technical meaning of each set may be defined as shown in Table 2 below.

**[Table 2]**

| | | Clause 5.2.1 in TR38.843 |
|---|---|---|
| ... | | |
| The following are selected as representative sub-use cases: | | |
| | - BM-Case1: Spatial-domain Downlink beam prediction for Set A of beams based on measurement results of Set B of beams | |
| | | ... |
| | - BM-Case2: Temporal Downlink beam prediction for Set A of beams based on the historic measurement results of Set B of beams | |
| | | ... |
| Set B is a set of beams whose measurements are taken as inputs of the AI/ML model. | | |
| ... | | |

| | | Clause 6.3.2.3 in TR38.843 |
|---|---|---|
| ... | | |
| | - | **(Opt 2D)** For the case that Set B of beams (pairs) is a subset of measured beams (pairs) Set C (where Set C is fixed across training and inference), compared to the case with all measurements of measured beam Set C as AI inputs |
| | | - **with Top K=1/2** of the measurements of Set C, |

To sum up, the set A of beams (hereinafter, 'beam set A') includes a set of beams to be predicted through AI/ML, the set B of beams (hereinafter, 'beam set B') includes a set of beams to be utilized as input data for AI/ML in order to predict the beams within beam set A, and the set C of beams (hereinafter, 'beam set C') includes a set of beams on which beam measurement is performed. Here, the beams included in beam set C may or may not be utilized as input data for AI/ML.

When set U is a set of DL transmission beams of an arbitrary region served by a base station, for example, the entire coverage or a region within a specific wide-beam, that is composed of a total of N_{DL_TxBeam} beams, the beams of beam set A and the beams of beam set B become elements of set U, and beam set A and beam set B are each a subset of set U.

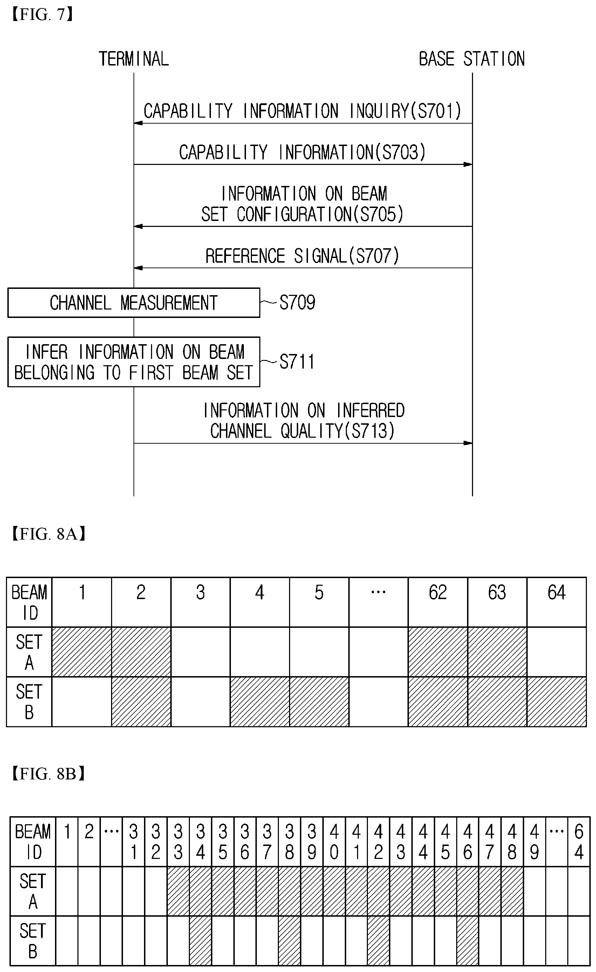

FIG. 7 illustrates a procedure for AI/ML-based beam management according to an embodiment of the present disclosure. As shown in FIG. 7, for the procedure for AI/ML-based beam management, a terminal and a base station interact with each other.

Referring to FIG. 7, in step S701, the base station transmits a capability information inquiry message to the terminal. After accessing the base station through an initial access procedure, the terminal may establish a connection and receive a request for capability information from the base station.

In step S703, the terminal transmits a capability information message to the base station. The terminal may transmit information on communication-related hardware or functional capability to the base station. Here, according to an embodiment of the present disclosure, the terminal may transmit information related to AI/ML-based beam management. Specifically, the capability information message may include information indicating that an AI/ML-based beam management feature is supported, information indicating that a UE-side AI/ML beam management feature is supported, information on a model for beam management, and the like. Thus, the base station may determine that beam management for the terminal may be performed based on an AI/ML.

In step S705, the base station transmits a message including information on a beam set configuration. Here, the beam set configuration includes information on a first beam set including beams that are an object of inference and a second beam set including beams that are used to obtain input data for the inference. According to an embodiment of the present disclosure, the information on the beam set configuration may explicitly or implicitly indicate the beam(s) belonging to the first beam set and the beam(s) belonging to the second beam set. A beam index, a reference signal index, a resource index, an indicator based on a representation scheme of the beams, physical information of a beam (e.g., a direction, etc.), and the like may be used to indicate the beams.

In step S707, the base station transmits at least one reference signal. At this time, the base station transmits at least one reference signal corresponding to at least one beam belonging to the second beam set. Although not illustrated in FIG. 7, configuration information or control information for the transmission of the reference signal may be signaled before the reference signal is transmitted. The terminal may receive at least one reference signal belonging to the second beam set based on the configuration information or the control information.

In step S709, the terminal performs channel measurement. In other words, the terminal acquires channel quality information by performing measurement on at least one reference signal belonging to the second beam set. For example, the channel quality information may include a reference signal received power (RSRP). At this time, channel quality information on one or a plurality of beams is acquired.

In step S711, the terminal infers information on at least one beam belonging to the first beam set. That is, the terminal may use the channel quality information on at least one reference signal belonging to the second beam set as input data to generate information on at least one beam belonging to the first beam set through an AI/ML model. Here, the information obtained through the inference may be information of the same kind as the information obtained through the preceding channel measurement or may be a different kind of information. For example, the information obtained through the inference may include at least one of an RSRP, a precoding matrix indicator (PMI), a rank indicator (RI), and channel quality information (CQI). As another example, the information obtained through the inference may include probability information. Here, an object of the probability information may be defined in various ways; specifically, it may include a probability value that each beam belongs to top-K beams (e.g., the best K beams selected based on a specific metric (e.g., L1-RSRP, etc.)). As still another example, the information obtained through the inference is a value representing a characteristic of a beam and specifically may include a vector value of a latent space.

In step S713, the terminal transmits information on the inferred channel quality. To this end, although not illustrated in FIG. 7, configuration information or control information for feedback of the information on the channel quality may be signaled. The terminal may transmit, to the base station, information on at least one beam belonging to the first beam set that is inferred using the AI/ML model, through a resource identified based on the configuration information or the control information.

AI/ML-based beam management may be performed according to the above-described procedure. In the above-described procedure, the base station signals configurations of the beam sets to the terminal. Here, the beam sets may include beam set A and beam set B that are described above with reference to Table 2. Hereinafter, the present disclosure describes various embodiments of the configurations and signaling of the beam sets.

FIGS. 8A to 8C illustrate examples of configurations of beam sets according to an embodiment of the present disclosure.

FIG. 8A is an example showing the configurations of beam set A and beam set B in a total of 64 beams (e.g., NDL_TxBeam=64). Referring to FIG. 8A, beam set A includes beam #1, beam #2, beam #62, beam #63, and beam #64, and beam set B includes beam #2, beam #4, beam #5, beam #62, beam #63, and beam #64. In the example of FIG. 8A, beam set A and beam set B are configured without any particular regularity. As in the example of FIG. 8A, two beam sets may be configured randomly, but a more efficient configuration may be achieved in consideration of performance and complexity. For example, a case such as FIG. 8B is possible.

FIG. 8B is an example in which, in a total of 64 beams (e.g., NDL_TxBeam=64), beam set A is configured to include beams having consecutive indices. In FIG. 8B, beam set A is composed of beams with beam IDs 33 to 48, and beam set B is composed of some of the beams of beam set A. In other words, beam set B is a subset of beam set A. When beam set A and beam set B are configured in this way, this may be understood as beam management based on a scheme of using measurements and/or information on a small number of beams as inputs to AI/ML to predict characteristics of neighboring beams that will be correlated with the beams (e.g., the beams used as inputs). Extending the example of FIG. 8B, there may be a case in which one beam is measured to predict the beams of beam set A, and there may also be a case in which beam set A and beam set B are identical.

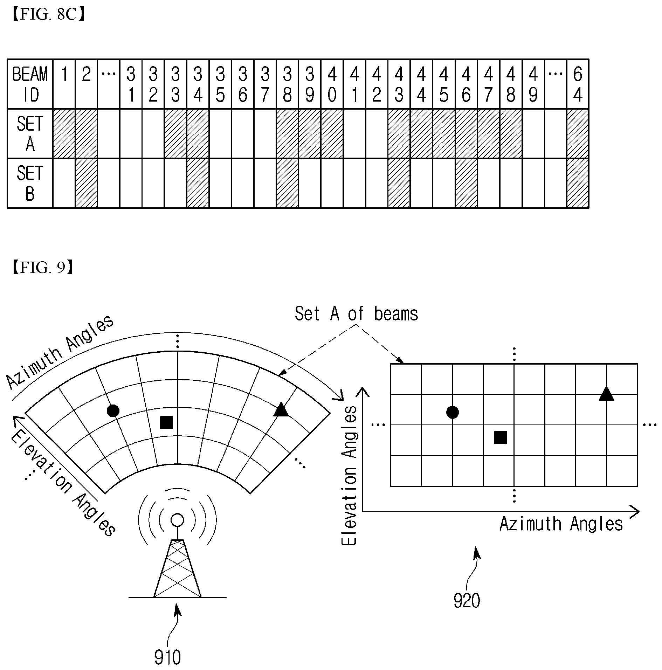

In the example of FIG. 8B, beam set A is composed of consecutive beam IDs. However, as in FIG. 8C, it is also possible that beam set A is composed of non-consecutive beam IDs and beam set B is configured as a subset of beam set A.

The present disclosure proposes a DL transmission beam management scheme that is mainly discussed in Rel-19 AI/ML-based beam management.

FIG. 9 illustrates an example in which beams of a base station are represented in two dimensions according to an embodiment of the present disclosure. Referring to FIG. 9, a region covered by DL transmission beams may be represented in two dimensions based on an azimuth angle and an elevation angle, as in a first representation 910 of FIG. 9. In the first representation 910, eight regions are defined by the azimuth angle, four regions are defined by the elevation angle, and thus 32 beams belonging to beam set A are represented. The beams represented in FIG. 9 correspond to all or some of the beams that may be generated by the base station. A second representation 920 of FIG. 9 is a result of transforming the first representation 910 into orthogonal coordinates. In the second representation 920, one rectangular block represents one of the beams belonging to beam set A to be estimated by an AI/ML.

First, a terminal may inform the base station of a capability for AI/ML or a capability for AI/ML-based beam management. Prior to this operation, the base station may request a capability report from the terminal. When the base station determines that UE-side AI/ML-based beam management is to be performed, the base station may provide the terminal with information on the beams of beam set A. The information provided to the terminal may be used to perform an operation for UE-side AI/ML-based beam management and may include at least one of the number of beams of beam set A, the azimuth angle size or beam width of each beam, and the elevation angle size of each beam. In particular, as in the second representation 920 of FIG. 9, when beam set A may be represented by the number of rows (e.g., n_row) and the number of columns (e.g., n_col), at least one of information on n_row and n_col, the azimuth angle for each column, and the elevation angle for each column may be further included in the information on the beams of beam set A or may replace the aforementioned items. Alternatively, all or only some of the items included in the information on beam set A described above may be used.

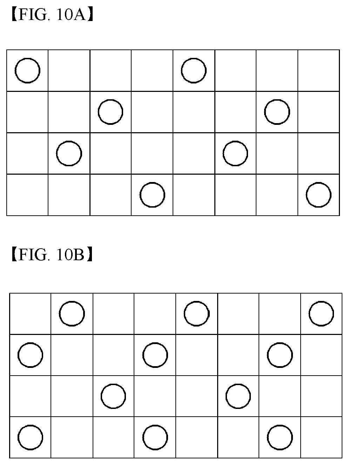

In addition, the base station needs to inform the terminal of information on beam set B. For a case in which beam set B is a subset of beam set A, there may be various forms of data format for informing the terminal of the configuration of beam set B. For example, one of Format 1, Format 2, and Format 3 below may be applied.
- Format 1: The base station may map each beam to one bit and indicate information on beam set B to the terminal in the form of a bitmap. For example, the beams included in beam set B may be indicated using a bitmap such as [10001000 00100010 01000100 00010001] for the case of FIG. 10A and [01001001 10010010 00100100 10010010] for the case of FIG. 10B.
- Format 2: The beams included in beam set B may be indicated using the lowest column index of the beams included in beam set B in each row and distance information between the elements of beam set B in each row. In the case of FIG. 10A, the lowest column indices of the beams belonging to beam set B in each row, that is, the starting column indices, are [0,2,1,3], respectively, and the distance between the elements of beam set B in each row is constant at 4. In addition, in the example of FIG. 10B, the lowest column indices per row, that is, the starting column indices, are [1,0,2,0], respectively, and the distance between the elements of beam set B in each row is 3. Accordingly, the base station may inform the terminal of the configuration of beam set B by indicating the starting column index of the beam per row and the spacing between the elements per row.
- Format 3: A bitmap that is commonly applied to all rows and a cyclic shift value of the bitmap for each row may be indicated. This method indicates a bitmap of [10001000] and cyclic shift values of [0,2,1,3] to represent beam set B of FIG. 10A. In the case of FIG. 10B, the configuration of beam set B may be indicated using a bitmap of [10010010] and cyclic shift values of [1,0,2,0].

While Format 2 and Format 3 of the above description may be applied to a case in which beam set B has a specific pattern, Format 1 may also indicate an irregular pattern of beam set B. Accordingly, in consideration of a beam set pattern, a scheme of selectively indicating Format 1, Format 2, and Format 3 may also be applied depending on a case. For example, when a regular pattern is to be indicated, Format 3 may be used, and when an irregular pattern is to be indicated, Format 1 may be used.

Format 1, Format 2, and Format 3 described above may be changed to formats in which the configurations of rows and columns are switched. For example, in the case of Format 1, a bitmap is generated as [01001001 10010010 00100100 10010010] to indicate FIG. 10B, but a bitmap in a form in which the rows and columns are switched with each other, such as [0101 1000 0010 0101 1000 0010 0101 1000], may be generated. Format 2 and Format 3 may also use a similar modified format.

Various embodiments may be utilized to indicate the above-described information on beam set B.

In a first method, the information on beam set B may be delivered to a terminal through a MAC_CE or RRC configuration in the same or a similar form as Format 1/2/3 described above. This method may require frequent configuration when the information on beam set B is updated frequently. If a plurality of formats are utilized to indicate the beam set B information as described above, an additional indicator is necessary to inform which format the data is for.

In a second method, candidates for a large amount of pattern information of beam set B that may occur in a specification document may be predefined together with a pattern ID, for example, in the same or a similar form as Format 1, Format 2, and Format 3. Through this method, a base station may select one of the predefined patterns and indicate a pattern of beam set B to a terminal through the pattern ID. Here, the base station may indicate, in addition to the pattern ID, additional information (e.g., a valid time for the pattern, another pattern ID to be used sequentially, etc.). Table 3 below is an example in which patterns are represented in the form of Format 3, and candidate patterns may also be defined in a similar method for Format 1 or Format 2.

**[Table 3]**

| Pattern ID | n_row, n_col | Pattern bitmap | Cyclic shift |
|---|---|---|---|
| ... | ... | ... | ... |
| 100 | (4,8) | [10001000] | [1 0 2 3] |
| 101 | (4,8) | [10001000] | [0 2 1 3] |
| 102 | (4,8) | [10010010] | [1 0 2 3] |
| 103 | (4,8) | [10010010] | [0 2 1 3] |
| 104 | (4,8) | ... | ... |
| ... | ... | ... | ... |

In a third method, as candidates for a pattern of beam set B described above, one or a plurality of candidates are configured in advance for a terminal by a base station through RRC signaling, beam set B for an AI/ML operation is selected as one of the candidates, and an identifier of the selected candidate is indicated through DCI, MAC_CE, or RRC configuration. In this case, the candidates that the base station configures for the terminal may be defined similarly to the second method.

In UE-side AI/ML-based beam management, because a terminal may use a result of beam management as an input of an AI/ML, beam set B and beam set C may be determined to be identical. Accordingly, a base station may not provide information on beam set C to the terminal.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-stage language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of operating a terminal in a wireless communication system, the method comprising:
determining a first set and a second set of beams for artificial intelligence (AI)/machine learning (ML)-based beam management;
receiving at least one reference signal corresponding to at least one beam belonging to the second set;
predicting information on at least one beam included in the first set based on the at least one reference signal; and
transmitting the information on the at least one beam to a base station,
wherein the information on the at least one beam included in the first set is predicted based on a measurement result for the at least one reference signal corresponding to the at least one beam included in the second set.

2. The method of claim 1, wherein the first set includes beams having consecutive indices.

3. The method of claim 1, wherein the first set includes groups including beams having consecutive indices, and
wherein the second set is configured to include at least one beam included in each of the groups.

4. The method of claim 1, further comprising:
transmitting capability information on the AI/ML-based beam management to a base station; and
receiving at least one message including a configuration for the first set and a configuration for the second set.

5. The method of claim 1, further comprising receiving at least one message including a configuration for the first set and a configuration for the second set,
wherein the configuration for the first set includes at least one of the number of beams included in the first set, an azimuth angle size or a beam width of each of the beams, an elevation angle size of each of the beams, the number of rows and the number of columns for a two-dimensional representation of the beams, an azimuth angle for each column, and an elevation angle for each column.

6. The method of claim 1, further comprising receiving at least one message including a configuration for the first set and a configuration for the second set,
wherein the configuration for the second set includes information on beams included in the second set.

7. The method of claim 6, wherein the information on the beams included in the second set includes a bitmap in which each bit is mapped to a candidate beam.

8. The method of claim 6, wherein the information on the beams included in the second set includes a starting column index for each row and a row index spacing of a two-dimensional representation of the beams.

9. The method of claim 6, wherein the information on the beams included in the second set includes a bitmap for a representative row of a two-dimensional representation of the beams and a cyclic shift value for at least one remaining row.

10. The method of claim 6, wherein the configuration for the second set includes an identifier indicating at least one pattern among candidate patterns that are predefined or configured through signaling for the beams included in the second set.

11. The method of claim 6, wherein the configuration for the second set includes information on a valid time of at least one pattern among candidate patterns that are predefined or configured through signaling for the beams included in the second set.

12. The method of claim 1, wherein the information on the at least one beam includes at least one of a reference signal received power (RSRP), a precoding matrix indicator (PMI), a rank indicator (RI), channel quality information (CQI), and a vector value of a latent space representing a characteristic of a beam.

13. A method of operating a base station in a wireless communication system, the method comprising:
determining a first set and a second set of beams for artificial intelligence (AI)/machine learning (ML)-based beam management;
transmitting at least one reference signal corresponding to at least one beam belonging to the second set; and
receiving information that is predicted based on the at least one reference signal and relates to at least one beam included in the first set,
wherein the information that relates to the at least one beam included in the first set is predicted based on a measurement result for the at least one reference signal corresponding to the at least one beam included in the second set.

14. The method of claim 13, further comprising:
receiving capability information on the AI/ML-based beam management from a terminal; and
transmitting, to the terminal, at least one message including a configuration for the first set and a configuration for the second set.

15. A terminal in a wireless communication system, comprising:
at least one transceiver;
at least one processor; and
at least one memory operably coupled to the at least one processor and storing instructions that, when executed by the processor, control the terminal to perform operations,
wherein the operations comprise:
determining a first set and a second set of beams for artificial intelligence (AI)/machine learning (ML)-based beam management;
receiving at least one reference signal corresponding to at least one beam belonging to the second set;
predicting information on at least one beam included in the first set based on the at least one reference signal; and
transmitting the information on the at least one beam to a base station, and
wherein the information on the at least one beam included in the first set is predicted based on a measurement result for the at least one reference signal corresponding to the at least one beam included in the second set.

16. A base station in a wireless communication system, comprising:
at least one transceiver;
at least one processor; and
at least one memory operably coupled to the at least one processor and storing instructions that, when executed by the processor, control the terminal to perform operations,
wherein the operations comprise:
determining a first set and a second set of beams for artificial intelligence (AI)/machine learning (ML)-based beam management;
transmitting at least one reference signal corresponding to at least one beam belonging to the second set; and
receiving information that is predicted based on the at least one reference signal and relates to at least one beam included in the first set, and
wherein the information that relates to the at least one beam included in the first set is predicted based on a measurement result for the at least one reference signal corresponding to the at least one beam included in the second set.
